Europäisches Patentamt

European Patent Office

Office européen des brevets

(19)

(11) **EP 0 878 698 A1**

(12) **EUROPEAN PATENT APPLICATION**

(43) Date of publication:
**18.11.1998 Bulletin 1998/47**

(51) Int. Cl.$^6$: **G01M 1/00**, G01M 17/04

(21) Application number: **98108822.2**

(22) Date of filing: **14.05.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **15.05.1997 IT MI971130**

(71) Applicant: **Vamag S.r.l.**
**21012 Cassano Magnano (Varese) (IT)**

(72) Inventor: **Crosta, Gianfranco**
**21049 Tradate( VA ) (IT)**

(74) Representative:
**Faggioni, Giovanmaria, Dr. et al**
**Fumero-Studio Consulenza Brevetti**
**Franz-Joseph-Strasse 38**
**80801 München (DE)**

(54) **Method and device to check the suspensions of a motor vehicle**

(57)     The invention concerns a method to check the suspensions of a motorvehicle, according to which: the motorvehicle (1) is positioned with its wheels (5, 6) bearing onto vibrating ramps (3, 4) of an oscillating loading platform (2); an accelerometer (7) is applied onto one or onto each of the motorvehicle wheels, to measure directly the accelerations undergone by said wheels; oscillations are imparted on said vibrating ramps (3, 4) and/or on said platform (2), with a frequency varying from 3 to 25 Hz; and the acceleration signal (8) issued from said accelerometer (7) is processed into a computer to give an indication of the conditions of the suspensions.

     Said method is carried out with a device comprising, in combination with an oscillating loading platform (2) equipped with vibrating ramps (3, 4), onto which the motorvehicle (1) bears with its wheels (5, 6), an accelerometer (7) applied on one or on each of the motorvehicle wheels, and a computer apt to read the signal (8) issued from said accelerometer (7), process the same and convert it into a readable form.

FIG.1

EP 0 878 698 A1

**Description**

The present invention concerns a method to check the suspensions of a motorvehicle, of the type providing for oscillations to be imparted on the wheels, and a device to carry out said method.

It is most important for the suspensions of a motorvehicle to be efficient, for reasons of comfort as well as of safety. Consequently, in reckoning the proper working of the suspensions of a motorvehicle, one should simultaneously take into account these two parameters (comfortable driving, also on an uneven road surface, and adherence to the ground in any driving conditions).

These two conditions are reached mainly through the shock absorbers - forming part of the suspensions - which absorb part of the energy stored up in the elastic elements of the suspensions and dissipate it, so as to prevent the undamped oscillations of the suspensions from causing the parting of the wheel from the ground and giving rise to troublesome bounces of the vehicle.

The methods now adopted to check the efficiency of said damping and the amount of energy absorbed, consist in measuring the response to oscillations being imparted on the motorvehicle, or on parts thereof. The methods are fundamentally of two types: those imparting oscillations on the motorvehicle, and those imparting oscillations on the single wheels. To reduce the amount of energy applied in order to obtain an oscillation, one usually operates at an oscillation frequency close to the resonance frequency which, due to the considerable mass of the motorvehicles, is on an average not too high for example of the order of a few cycles per second. Said frequency rises to values of about 10-20 cycles per second for the oscillations imparted on the wheels.

A method belonging to the first aforementioned type involves loading the suspensions of the motorvehicle by pressing onto its body, and then suddenly unloading them, in a uniform manner, and measure the number of oscillations produced. There are methods which, starting from a signal issued by a "load" sensor, allow to obtain the acceleration curve in respect of time, so as to supply a partially quantitative rating. Methods of this type are known from DE-G-94 14 747 and DE-A1-27 43 272.

A drawback of the methods of this first type is that they allow to measure only the behaviour of the single suspension - or rather of the single shock absorber - in a roughly quantitative way, but do not allow to obtain a qualitative measurement of the overall response of the suspensions of the motorvehicle.

The methods of the second type allow instead to separately measure the behaviour of each one of the wheels, since the action imparted on a wheel is disjoined from the actions imparted on the other wheels, thanks to the high frequency of oscillations produced.

Among the known methods of this second type, the one called EUSAMA is particularly effective. According to this method, the efficiency of the suspensions of a motorvehicle is determined, always starting from signals issued by load sensors, merely on the basis of safety parameters, by trying to always identify the hardest conditions of use and setting a limit below the adherence thus measured.

The object of the present invention is to propose a method apt to measure the efficiency of a suspension system, on the basis both of safety and of comfort parameters, by combining the advantages of the two types of known methods. Such an object is fully reached by the present invention thanks to the characteristics described in claims 1 and 5.

The present invention will now be described in further detail, with reference to the accompanying drawings, in which:

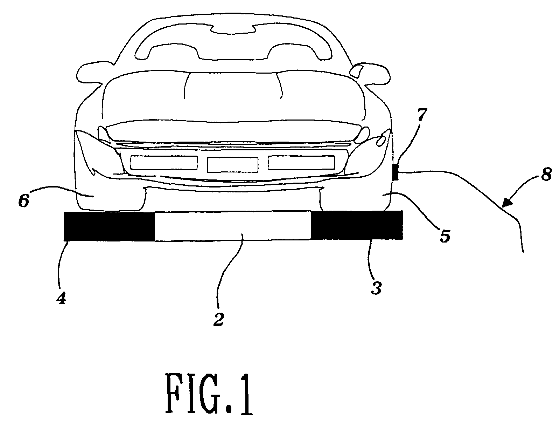

Fig. 1 is a front view of a motorvehicle mounted on an oscillating loading platform, comprising an accelerometer fixed onto one of its wheels, to allow applying the method according to the present invention; and

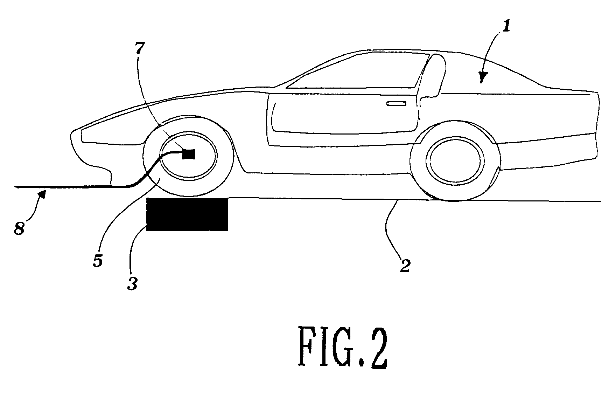

Fig. 2 is a lateral view of the same motorvehicle shown in fig. 1.

The motorvehicle 1 (a motorcar in the examples shown) is lifted to rest onto an oscillating loading platform 2. Such platforms are built and sold specially for checking the suspensions of motorvehicles. An example of said platforms are the ST or STR platforms produced and sold by the Applicant. The platform 2 comprises, in known manner, vibrating ramps 3, 4, onto which bear the wheels 5, 6, of the motorvehicle 1; as many ramps can be positioned in correspondence of the rear wheels of the vehicle.

According to the invention, an accelerometer 7 is fixed onto each of the wheels 5, 6, issuing a signal 8 to the reading system. The reading system consists of a computer equipped with a suitable processing program which allows to obtain the desired parameters on the conditions of the suspensions, starting from the acceleration values.

When wishing to apply the method of the present invention to check the suspensions of a motorvehicle 1, an oscillation is imparted on its wheels 5, 6, thanks to the action of the vibrating ramps 3, 4. Such ramps are apt to vibrate with a frequency which can be varied from 3 to 25 Hz, namely in the range - as already mentioned in the introduction - of the resonance frequency of the unit formed by the wheels and by the movable part of the respective suspensions of the motorvehicle, and high enough to disjoin the movements of one wheel from those of the other wheels.

The oscillations imparted on the wheels 5, 6, by the ramps 3, 4, cause an acceleration on said wheels, whose value is detected by the accelerometers 7 as an electric signal. Said signal, issued from the output 8, is sent for example to a computer which, to start with, converts the acceleration signal into a readable form. From the value of the acceleration signal it is possible - through a suitable processing program, not forming part of the present invention - to obtain the parameters allowing to check the conditions of the suspensions.

Hereinafter, an example is given on how to measure said parameters. The dynamic function of the system comprising the motorvehicle 1 and the vibrating ramps 3, 4, can be expressed with the following differential equation:

$$(\partial^2 x/\partial t^2)m = k_1 x + k_2 (x\text{-}xp) - a(\partial x/\partial t)$$

wherein:

- m is the suspended mass expressed in kg;
- $k_1$ is the elastic constant of the tested suspensions expressed in N/m;
- $k_2$ is the elastic constant of the tyre expressed in N/m;
- a is the damping coefficient of the suspensions expressed in Ns/m;
- x is the displacement of the suspended system expressed in m; and
- xp is the displacement of the oscillating platform expressed in m.

The equation can be solved by putting the imparted oscillations in the form exp(i $\omega t+\phi$), and the displacement x in the form A*exp(i $\omega t$); one thereby obtains:

$$sin(\phi) = \frac{aA\omega}{k_2}$$

and:

$$A = \frac{k_2}{\sqrt{(m\omega^2 + k_1 + k_2)^2 + (a\omega)^2}}$$

If $k_2$ is very high, then A* is very close to the unit, so as to stop from clearly distinguishing between tyre and suspensions, seen that the phase proves to depend from a and from $k_2$. Whereas, if $k_2 \ll k_1$, then the phase proves to depend from $k_1$, $k_2$ and a. It is then sufficient to impart a high oscillation frequency, such that $\omega^2 \gg (k_1 + k_2)$, in order to obtain:

$$A_1 = \frac{k_2}{\sqrt{m^2\omega_1^4 + (a\omega_1)^2}}$$

It is then possible to impart low frequency oscillations, thereby obtaining:

$$A_2 = \frac{k_2}{\sqrt{k_1^2 + (a\omega_2)^2}}$$

The results obtained can then be combined into a single equation, fully independent from the value of $k_2$:

$$\frac{A_1}{A_2} = \sqrt{\frac{k_1^2 + (a\omega_2)^2}{m^2\omega_1^4 + (a\omega_1)^2}}$$

## Claims

1. Method to check the suspensions of a motorvehicle, characterized in that,

   - said motorvehicle (1) is positioned with its wheels (5, 6) bearing onto vibrating ramps (3, 4) of an oscillating loading platform (2);
   - an instrument (7) is applied onto at least one of the motorvehicle wheels, to measure directly the accelerations undergone by said wheel;
   - oscillations are imparted on said vibrating ramps (3, 4) and/or on said platform (2), with a frequency varying from 3 to 25 Hz; and
   - the acceleration signal (8) issued from said instrument (7) is used to indicate the conditions of the suspension.

2. Method as in claim 1), wherein said instrument (7) is an accelerometer.

3. Method as in claim 2), wherein said instrument (7) is applied onto each one of the motorvehicle wheels.

4. Method as in any one of the previous claims, comprising moreover an electronic processing step, to process the signals (8) issued from said instruments (7) measuring the accelerations.

5. Device to check the suspensions of a motorvehicle (1), characterized in that it comprises an oscillating loading platform (2) equipped with vibrating means, onto which said motorvehicle (1) bears with its wheels (5, 6), and an instrument (7) to measure the accelerations, applied onto at least one of the motorvehicle wheels.

6. Device as in claim 5), characterized in that said vibrating means consist of vibrating ramps (3, 4) onto which bear at least some of the motorvehicle wheels (5, 6).

7. Device as in claim 5), characterized in that said measuring instrument (7) is an accelerometer, fixed to at least one of the motorvehicle wheels (5, 6).

8. Device as in claim 5), characterized in that said measuring instrument (7) is an accelerometer, fixed to each one of the motorvehicle wheels (5, 6).

9. Device as in claim 5), 6) or 7), characterized in that it moreover comprises a computer apt to read, process and convert into a readable form the signals (8) issued from said measuring instrument or instruments (7).

FIG.1

FIG.2

**European Patent Office**

**EUROPEAN SEARCH REPORT**

Application Number

EP 98 10 8822

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DE 27 43 272 A (ASER SA ;LESCHOT GEORGES ANDRE (CH)) 30 March 1978 * the whole document * | 1-5,7,8 | G01M1/00 G01M17/04 |
| Y | EP 0 611 960 A (HOFMANN WERKSTATT TECHNIK) 24 August 1994 * the whole document * | 1-5,7,8 | |
| X | PATENT ABSTRACTS OF JAPAN vol. 014, no. 165 (P-1030), 30 March 1990 & JP 02 021235 A (KANTO AUTO WORKS LTD), 24 January 1990 | 5 | |
| Y | * abstract * | 9 | |
| Y | DE 94 14 747 U (NEEDLEMAN NATHAN ;CRUMMENAUER HELGA (DE)) 1 December 1994 * claim 10 * | 9 | |
| A | DE 44 32 286 A (MUELLER ROLAND) 14 March 1996 * column 3, line 57 - line 67 * | 1,2 | TECHNICAL FIELDS SEARCHED (Int.Cl.6) G01M |

The present search report has been drawn up for all claims

| Place of search | Date of completion of the search | Examiner |
|---|---|---|
| THE HAGUE | 24 August 1998 | Zafiropoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)